# EUROPEAN PATENT APPLICATION

(11) **EP 4 694 203 A1**
(43) Date of publication of application: **11.02.2026**
(21) Application number: 24810018.2
(22) Date of filing: 12.03.2024
(51) Int. Cl.: H04R 9/06, H04R 1/20, H04R 9/02

(54) **LOUDSPEAKER MODULE AND ELECTRONIC DEVICE**

(30) Priority: 25.05.2023 CN 202310609839
(71) Applicant: Honor Device Co., Ltd., Shenzhen, Guangdong 518040 (CN)
(72) Inventor: ZHOU, Jun, Shenzhen, Guangdong 518040 (CN); ZHANG, Yingbo, Shenzhen, Guangdong 518040 (CN); SHI, Weijie, Shenzhen, Guangdong 518040 (CN)
(74) Representative: Isarpatent
(86) International application number: PCT/CN2024/081111
(87) International publication number: WO 2024/239769

(57) **Abstract**

This application discloses a speaker module and an electronic device, and belongs to the field of electronic device technologies. The speaker module includes a housing body, a first speaker, and a second speaker. The housing body has a sound outlet and a sound outlet channel, and the sound outlet channel is in communication with the sound outlet. The first speaker and the second speaker are spaced from each other in the sound outlet channel in a first direction, the second speaker is located on a side that is of the first speaker and that is away from the sound outlet, and an operating frequency band of the first speaker is different from an operating frequency band of the second speaker. In the speaker module provided in this application, the two speakers are disposed side by side from far to near relative to the sound outlet. When the sound outlet is disposed on a wide side of the electronic device, the two speakers are spaced from each other in a length direction of the electronic device, thereby implementing mounting of a speaker with a large size.

## Description

This application claims priority to Chinese Patent Application No. 202310609839.4, filed with the China National Intellectual Property Administration on May 25, 2023 and entitled "SPEAKER MODULE AND ELECTRONIC DEVICE", which is incorporated herein by reference in its entirety.

### TECHNICAL FIELD

This application relates to the field of electronic device technologies, and in particular, to a speaker module and an electronic device.

### BACKGROUND

Currently, electronic devices such as a tablet computer, a mobile phone, and a desktop computer have gradually increased demands for sound play, and increasingly higher requirements for sound play quality. Therefore, in some electronic devices, a high-low frequency division solution is used for sound play.

The high-low frequency division solution is that at least two speakers are disposed in the electronic device, where one of the speakers is a woofer responsible for reproduction of high-frequency sound, and the other speaker is a tweeter responsible for reproduction of low-frequency sound. In a related technology, the woofer and the tweeter are disposed side by side in a width direction in the electronic device at locations equidistant from a sound outlet.

However, in the foregoing electronic device, because a development trend of the electronic device is miniaturization, a larger size of the woofer in a specific range indicates better low-frequency performance. Consequently, a wide side of the electronic device cannot accommodate the tweeter and the woofer with a large size.

### SUMMARY

This application provides a speaker module and an electronic device. In the speaker module, two speakers are disposed side by side from far to near relative to a sound outlet. When the sound outlet is disposed on a wide side of the electronic device, the two speakers are spaced from each other in a length direction of the electronic device, thereby implementing mounting of a speaker with a large size.

The technical solutions are as follows.

According to a first aspect, this application provides a speaker module, including
a housing body, where the housing body has a sound outlet and a sound outlet channel, and the sound outlet channel is in communication with the sound outlet; and
a first speaker and a second speaker, spaced from each other in the sound outlet channel in a first direction, where the second speaker is located on a side that is of the first speaker and that is away from the sound outlet, and an operating frequency band of the first speaker is different from an operating frequency band of the second speaker.

The speaker module may be applied to an electronic device. When the sound outlet is located on a wide side of the electronic device, the first speaker is disposed close to the wide side, and the second speaker is located on a side that is of the first speaker and that is away from the wide side, that is, the first speaker and the second speaker are spaced from each other in a length direction. In the electronic device, because a size of the length direction is greater than a size of a width direction, an accommodating space of the electronic device in the length direction is larger, and in a specific width range, the first speaker with a larger size and the second speaker may be accommodated. When one of the first speaker and the second speaker is a woofer, the electronic device may be configured to dispose the woofer with a larger size, to improve bass performance.

In conclusion, the speaker module may be provided with the woofer with a larger size in the electronic device with a relatively small width size, to improve bass performance.

In some implementations, the operating frequency band of the first speaker is higher than the operating frequency band of the second speaker.

In the foregoing disposition manner, the speaker with the higher operating frequency band is located at a location closer to the sound outlet, to improve treble performance.

In some implementations, the speaker module includes a baffle structure, the baffle structure separates the sound outlet channel into a first sound outlet channel and a second sound outlet channel, and the first sound outlet channel and the second sound outlet channel are separately in communication with the sound outlet.

In the foregoing disposition manner, the baffle structure reduces a size of the sound outlet channel corresponding to the first speaker, that is, reduces a proportion of sound that is emitted by the first speaker and that is propagated in a direction away from the sound outlet, so that more of sound of the first speaker is directly propagated toward the sound outlet.

In some implementations, the second sound outlet channel is in communication with the first sound outlet channel, and a communication part between the second sound outlet channel and the first sound outlet channel is located between the first speaker and the sound outlet.

In the foregoing disposition manner, the second sound outlet channel is in communication with the first sound outlet channel, thereby improving airflow smoothness in the second sound outlet channel. Because the sound outlet is located between the first speaker and the sound outlet, backflow and propagation of the sound of the first speaker in the direction away from the sound outlet may be reduced to some extent.

In some implementations, a first limiting region and a second limiting region are disposed on the baffle structure, the first limiting region is in communication with the first sound outlet channel, the second limiting region is in communication with the second sound outlet channel, the first speaker is mounted in the first limiting region, and the second speaker is mounted in the second limiting region.

In the foregoing disposition manner, the first limiting region and the second limiting region are disposed, so that the first speaker and the second speaker can be fastened in the baffle structure, thereby improving stability of fastening the first speaker and the second speaker.

In some implementations, the housing body includes a first wall and a second wall, the first wall and the second wall are disposed at an angle and connected, the sound outlet is disposed on the first wall, the baffle structure includes a baffle plate, the baffle plate is disposed on a side that is of the first speaker and that faces the second wall, and in the first direction, there is a first gap between the baffle plate and the first wall; and in a second direction, there is a second gap between the baffle plate and the second wall, the second sound outlet channel includes the second gap, the second sound outlet channel is in communication with the first sound outlet channel through the first gap, and the first direction is perpendicular to the second direction.

In the foregoing disposition manner, the first gap is disposed, so that a region in which the second sound outlet channel is in communication with the sound outlet is larger, thereby improving airflow smoothness in the second sound outlet channel.

In some implementations, the first gap is L1, a distance between the first speaker and the first wall is L2, and L1≤L2.

In the foregoing disposition manner, in a third direction, the baffle plate separates a sound outlet surface of the first speaker from the second sound outlet channel, to prevent the sound emitted by the first speaker from directly entering the second sound outlet channel.

In some implementations, in a third direction, a size of the sound outlet is greater than a size of the first sound outlet channel, a size of the second sound outlet channel is greater than the size of the first sound outlet channel, and two of the first direction, the second direction, and the third direction are perpendicular to each other.

In the foregoing disposition manner, the size of the sound outlet is larger, thereby improving airflow smoothness in the first sound outlet channel and the second sound outlet channel.

In some implementations, the first sound outlet channel includes a first guide surface, the first guide surface is located between the first speaker and the sound outlet, and the first guide surface is inclined relative to the second wall.

In the foregoing disposition manner, the first guide surface is disposed, so that air flow and sound in the first sound outlet channel flow in a direction close to the sound outlet.

In some implementations, the second sound outlet channel includes a first section and a second section that are in mutual communication in the third direction, the first section is in communication with the first sound outlet channel, the first section is in communication with the sound outlet through the first sound outlet channel, the second section is in communication with the sound outlet, the second section includes a second guide surface, and the second guide surface is inclined relative to the second wall.

In the foregoing disposition manner, the second guide surface is disposed, so that air flow and sound in the second sound outlet channel flow in a direction close to the sound outlet.

In some implementations, the speaker module includes a circuit board, the circuit board has a first conductive terminal and a second conductive terminal, the first conductive terminal is electrically connected to the first speaker, the second conductive terminal is electrically connected to the second speaker, and the circuit board is connected to the baffle structure.

In the foregoing disposition manner, the circuit board is configured to supply power to the first speaker and the second speaker.

In some implementations, the speaker module includes a cover plate, the cover plate is disposed on a side that is of the baffle structure and that is away from the second wall, and at least a partial structure of the circuit board is located between the cover plate and the baffle structure.

In the foregoing disposition manner, the cover plate and the baffle structure are respectively located on two sides of the cover plate to limit the circuit board, and the cover plate and the baffle structure protect the circuit board.

In some implementations, the cover plate has a first positioning region and a second positioning region, a side that is of the first speaker and that is away from the second wall is mounted in the first positioning region, and a side that is of the second speaker and that is away from the second wall is mounted in the second positioning region.

In the foregoing disposition manner, a partial region of the first speaker extends into the first positioning region, and a partial region of the second speaker extends into the second positioning region. In this way, in the second direction, the speaker module has a more compact structure and a smaller size, that is, has a smaller thickness.

In some implementations, a sealing structure is disposed between the baffle structure and the second wall, and the sealing structure is disposed on at least a side that is of the second sound outlet channel and that is away from the sound outlet.

In the foregoing disposition manner, the sealing structure improves sealing performance between the second wall and the baffle structure on the side that is of the second sound outlet channel and that is away from the sound outlet.

According to a second aspect, this application provides an electronic device, including the speaker module provided in any of the foregoing technical solutions.

According to the foregoing technical solutions, because the electronic device includes the foregoing speaker module, the electronic device has at least all beneficial effects of the speaker module. Details are not described herein again.

### BRIEF DESCRIPTION OF DRAWINGS

FIG. 1 is a schematic diagram of an electronic device applying a speaker module in a related technology;
FIG. 2 is a schematic diagram of a structure of a speaker module in a related technology;
FIG. 3 is a cross-sectional view of FIG. 2 in a direction A-A;
FIG. 4 is a cross-sectional view of FIG. 2 in a direction B-B;
FIG. 5 is an exploded view of components of a speaker module according to an embodiment of this application;
FIG. 6 is a schematic diagram 1 of an electronic device applying a speaker module according to an embodiment of this application;
FIG. 7 is a schematic diagram 2 of an electronic device applying a speaker module according to an embodiment of this application;
FIG. 8 is a schematic diagram 3 of an electronic device applying a speaker module according to an embodiment of this application;
FIG. 9 is a schematic diagram 4 of an electronic device applying a speaker module according to an embodiment of this application;
FIG. 10 is a schematic diagram of a structure of a speaker module according to an embodiment of this application;
FIG. 11 is a cross-sectional view of FIG. 10 in a direction C-C;
FIG. 12 is a cross-sectional view of FIG. 10 in a direction D-D;
FIG. 13 is a schematic diagram of a structure of a baffle structure in a speaker module according to an embodiment of this application from a perspective;
FIG. 14 is a cross-sectional view of FIG. 10 in a direction E-E;
FIG. 15 is an enlarged view of a location G in FIG. 12;
FIG. 16 is a schematic diagram of a structure of a baffle structure in a speaker module according to an embodiment of this application from another perspective;
FIG. 17 is an enlarged view of a location F in FIG. 5;
FIG. 18 shows a frequency response curve of a speaker module in a related technology; and
FIG. 19 shows a frequency response curve of a speaker module according to an embodiment.

Meanings represented by reference numerals in the accompanying drawings are respectively as follows:
1. woofer; 2. tweeter; 3. housing; 4. bass channel; 5. treble channel;
10. speaker module; 20. body part;
100. housing body; 101. bottom housing; 102. frame; 1021. second through hole; 103. cover plate; 1031. first positioning region; 1032. second positioning region; 104. first wall; 105. second wall; 110. sound outlet; 1101. first through hole; 120. sound outlet channel; 121. first sound outlet channel; 122. second sound outlet channel; 1221. first section; 1222. second section;
210. first speaker; 220. second speaker;
300. baffle structure; 301. first limiting region; 302. second limiting region; 303. first guide surface; 304. second guide surface; 310. baffle plate; 311. first gap; 312. second gap; 320. positioning column;
400. circuit board; 410. first conductive terminal; 420. second conductive terminal; 430. positioning hole;
500. dustproof member; and
600. sealing structure.

### DESCRIPTION OF EMBODIMENTS

To make the objectives, technical solutions, and advantages of this application clearer, the following further describes implementations of this application in detail with reference to the accompanying drawings.

It should be understood that "a plurality of" mentioned in this application means two or more. In the descriptions of this application, unless otherwise stated, "/" means "or". For example, A/B may indicate A or B. The term "and/or" in this specification is merely an association relationship for describing associated objects, and indicates that three relationships may exist. For example, A and/or B may indicate the following three cases: Only A exists, both A and B exist, and only B exists. In addition, to clearly describe the technical solutions of this application, words such as "first" and "second" are used to distinguish between same items or similar items with basically the same functions and effects. A person skilled in the art may understand that the words such as "first" and "second" do not limit a quantity or an execution sequence, and the words such as "first" and "second" do not define a definite difference.

The following explains and describes in detail a speaker module and an electronic device provided in embodiments of this application. In the embodiments of this application, electrical connection refers to conductor connection between two electrical components, which enables electrical signal transmission to be performed between the two electrical components.

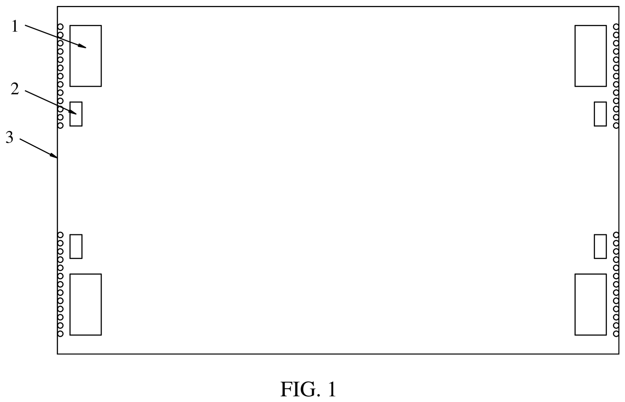

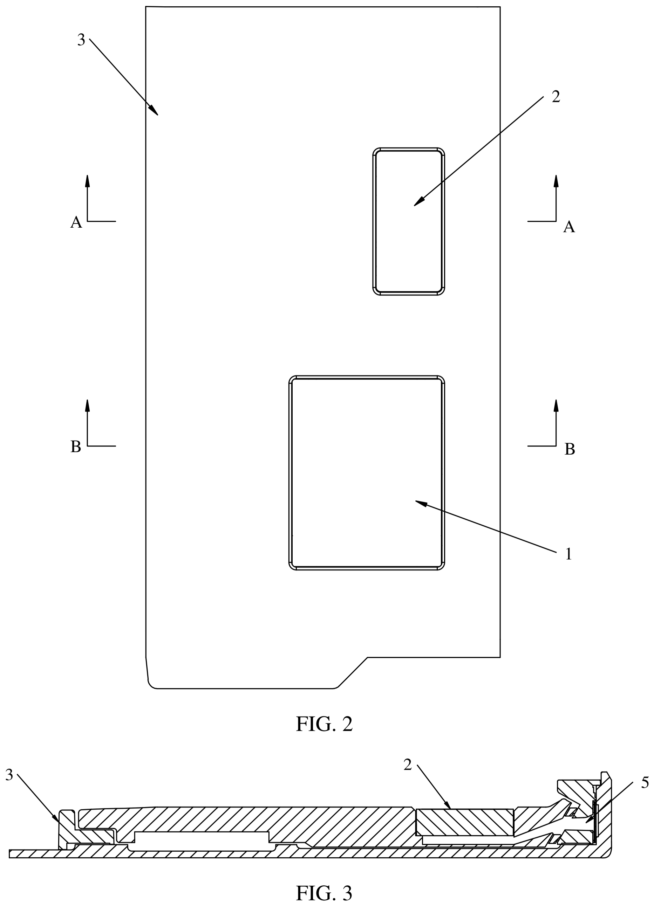

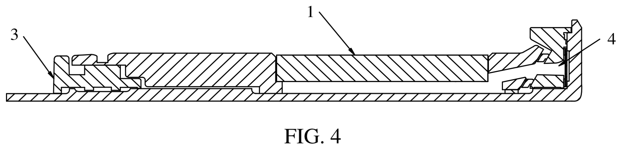

As shown in FIG. 1, in a related technology, an electronic device includes a housing 3 and a speaker module disposed on an inner side of the housing 3. In the speaker module, two speakers are disposed: a woofer 1 and a tweeter 2. The housing 3 has a wide side and a long side, and a size of the wide side is less than a size of the long side. In FIG. 1, a left-right direction is a length direction, and an up-down direction is a width direction. An opening is disposed on the wide side for sound outlet. The woofer 1 and the tweeter 2 are disposed side by side in the width direction beside the opening on the wide side. As shown in FIG. 2 to FIG. 4, the woofer 1 propagates sound to the opening through a bass channel 4, and the tweeter 2 propagates sound to the opening through a treble channel 5. The bass channel 4 and the treble channel 5 are disposed independently of each other and are not in communication. However, as a size of the woofer 1 increases and an overall size of the electronic device tends to be small, such a side-by-side disposition leads to a problem that it is difficult to implement layout or even layout cannot be implemented. To have good bass performance, a woofer 1 with larger size is required. To mount the woofer 1, the size of the wide side of the electronic device needs to be increased, which is not conducive to miniaturization development of the electronic device. If the woofer 1 needs to be mounted in the electronic device with a relatively small size, a woofer 1 with a large size cannot be mounted, but a woofer 1 with a small size can be mounted, resulting in relatively poor bass performance.

To resolve the foregoing problems, an embodiment provides a speaker module, applied to an electronic device. The electronic device may be any product or component with a sound emission function such as an electronic paper, a mobile phone, a tablet computer, a television set, a smart bracelet, a smartwatch, a display, or a notebook computer. A specific form of the electronic device is not particularly limited in this embodiment.

For ease of description, an example in which the speaker module is applied to a tablet computer is used for subsequent description.

The electronic device includes a body part and a display screen. The body part includes a battery cover and a middle frame. The display screen is disposed on a side of the middle frame, and the battery cover is disposed on the other side. A mounting space is formed between the battery cover, the display screen, and the middle frame, and is configured to mount other components in the electronic device. The battery cover may be in a shape of a flat plate and is disposed on only the other side of the middle frame, or may be in a shape of a bent plate and includes a first part disposed on the other side of the middle frame and a second part disposed on an outer side of the middle frame. The first part is connected to the second part, and the first part and the second part are disposed at an angle.

The body part may be of a structure similar to a cuboid, and has a length direction, a width direction, and a thickness direction. The display screen and the battery cover located on the two sides of the middle frame are spaced from each other in the thickness direction. Two of the length direction, the width direction, and the thickness direction are perpendicular to each other. In a projection of the body part 20 on a plane parallel to the display screen, a side with a smaller size is a wide side and the wide side extends in the width direction, and a side with a larger size is a long side and the long side extends in the length direction.

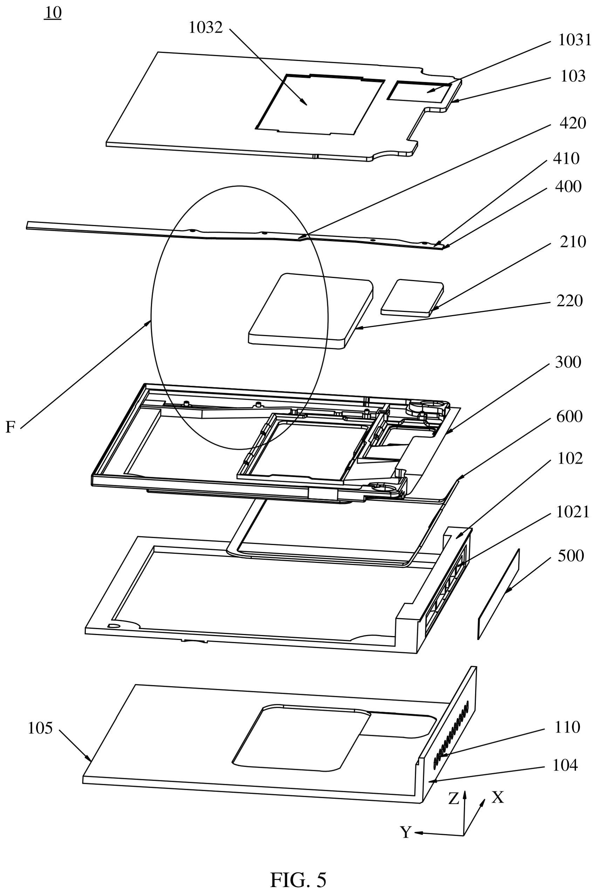

As shown in FIG. 5, a speaker module 10 provided in this embodiment includes a housing body 100, a first speaker 210, and a second speaker 220. The housing body 100 has a sound outlet 110 and a sound outlet channel 120. The sound outlet channel 120 is in communication with the sound outlet 110. The first speaker 210 and the second speaker 220 are spaced from each other in the sound outlet channel 120 in a first direction. The second speaker 220 is located on a side that is of the first speaker 210 and that is away from the sound outlet 110. An operating frequency band of the first speaker 210 is different from an operating frequency band of the second speaker 220.

The operating frequency band of the first speaker 210 is different from the operating frequency band of the second speaker 220. For example, one of the first speaker 210 and the second speaker 220 may be a woofer or mid-woofer and the other one may be a tweeter.

As shown in FIG. 5 to FIG. 9, the speaker module 10 has a first direction, a second direction, and a third direction. When the sound outlet 110 in the speaker module 10 is disposed on the wide side of the body part 20, the first direction is the length direction of the body part 20 and is a Y direction in the figure, the second direction is the thickness direction of the body part 20 and is a Z direction in the figure, and the third direction is the width direction of the body part 20 and is an X direction in the figure. The first speaker 210 and the second speaker 220 are spaced from each other in the sound outlet channel 120 in the first direction. That is, the first speaker 210 and the second speaker 220 are spaced from each other in the length direction of the body part 20. In the body part 20, because a size of the length direction is greater than a size of the width direction, an accommodating space of the body part 20 in the length direction is larger, and in a specific width range, the first speaker 210 with a larger size and the second speaker 220 may be accommodated, that is, a woofer or mid-woofer with a larger size may be disposed, thereby improving bass performance.

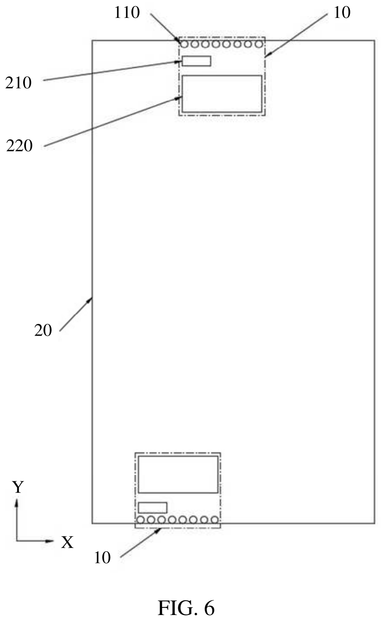

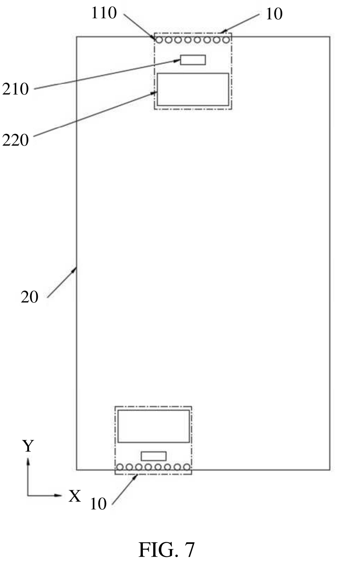

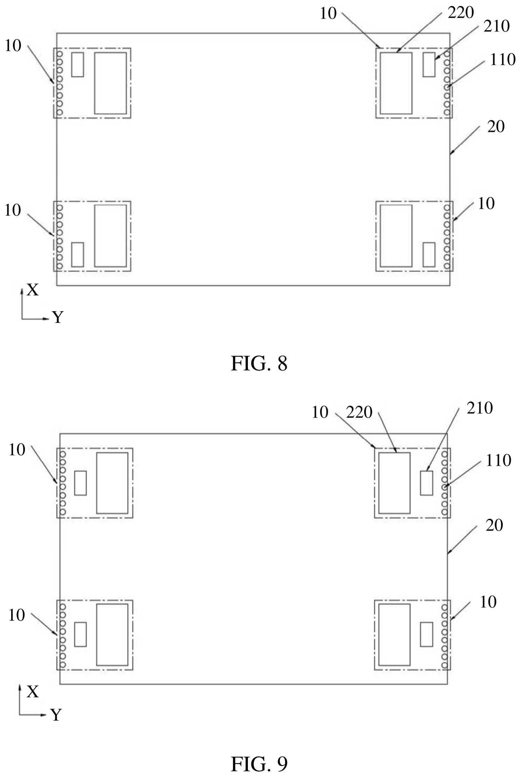

As shown in FIG. 6 and FIG. 7, when a width of the body part 20 of the electronic device is relatively small, two speaker modules 10 may be disposed in the electronic device. One of the speaker modules 10 is disposed close to one wide side of the body part 20, and the other speaker module 10 is disposed close to the other wide side of the body part 20. As shown in FIG. 8 and FIG. 9, when the width of the body part 20 of the electronic device is large, more speaker modules 10 may be disposed in the electronic device. For example, there are four speaker modules 10. Two of the speaker modules 10 are disposed close to one wide side of the body part 20 and the two speaker modules 10 are spaced from each other in the width direction, and the other two speaker modules 10 are disposed close to the other wide side of the body part 20 and the two speaker modules 10 are spaced from each other in the width direction.

When the speaker module 10 is applied to the electronic device, the housing body 100 of the speaker module 10 may be disposed independently of the body part 20 of the electronic device. In an assembly process, the housing body 100 is connected to the body part 20; the housing body 100 and the body part 20 may be of an integrated structure, that is, the housing body 100 is integrally formed with the body part 20; or a partial region of the body part 20 is used as the housing body 100. For example, a partial region of the battery cover and a partial region of the middle frame in the body part 20 may be used as the housing body 100 of the speaker, to form the sound outlet 110 and the sound outlet channel 120. When a plurality of speaker modules 10 are disposed in the electronic device, the battery cover may be divided into a plurality of regions to form housing bodies 100 of different speaker modules 10.

In an optional disposition manner, as shown in FIG. 5 and FIG. 10 to FIG. 12, the housing body 100 includes a bottom housing 101 and a frame 102, the bottom housing 101 is connected to the frame 102, the bottom housing 101, the frame 102, the first speaker 210, and the second speaker 220 jointly enclose the sound outlet channel 120, and the sound outlet 110 is disposed on the frame 102. For example, when the speaker module 10 is applied to the electronic device, the frame 102 and the middle frame are of an integrated structure, the frame 102 may be a part of the middle frame, the bottom housing 101 and the battery cover are of an integrated structure, and the bottom housing 101 may be a part of the middle frame. The sound outlet 110 runs through the bottom housing 101 and the frame 102, and the sound outlet 110 includes a first through hole 1101 and a second through hole 1021. The first through hole 1101 is disposed on the bottom housing 101, the second through hole 1021 is disposed on the frame 102, and the first through hole 1101 is in communication with the second through hole 1021. A dustproof member 500 may be disposed between the bottom housing 101 and the frame 102. The dustproof member 500 is located between the first through hole 1101 and the second through hole 1021. The dustproof member 500 may be of a mesh structure, and is used for air flow and sound to pass through with dust being shielded.

In some implementations, the operating frequency band of the first speaker 210 is higher than the operating frequency band of the second speaker 220. For example, the first speaker 210 is a tweeter, and the second speaker 220 is a woofer. In such a disposition manner, because the first speaker 210 is located between the second speaker 220 and the sound outlet 110, the first speaker 210 is closer to the sound outlet 110. Because the tweeter is closer to the sound outlet hole, a higher high-frequency band may be obtained, and high-frequency performance is better.

Because the second speaker 220 is located on the side that is of the first speaker 210 and that is away from the sound outlet 110, when the second speaker 220 is a woofer, as shown in FIG. 6 to FIG. 9, a size of the second speaker 220 may be set to be larger, and the second speaker 220 with the larger size is located behind the first speaker 210 with a smaller size. Therefore, obstruction caused by the first speaker 210 to the second speaker 220 is relatively small. In an optional implementation, as shown in FIG. 6 and FIG. 8, a width of the first speaker 210 is less than a width of the second speaker 220. In the third direction, the first speaker 210 is disposed close to a side of the second speaker 220. In FIG. 6, the first speaker 210 is disposed between a left region of the second speaker 220 and the sound outlet 110, and the first speaker 210 does not obstruct a region between a right region of the second speaker 220 and the sound outlet 110. Alternatively, as shown in FIG. 7 and FIG. 9, in another disposition manner, in the third direction, the first speaker 210 is centered relative to the second speaker 220. In FIG. 7, the first speaker 210 is disposed between a middle region of the second speaker 220 and the sound outlet 110, and the first speaker 210 does not obstruct a region between the left region of the second speaker 220 and the sound outlet 110 and a region between the right region of the second speaker 220 and the sound outlet 110.

In a feasible disposition manner, the sound outlet channel 120 may be a channel that is close to a side of the sound outlet 110 and that extends in a direction away from the sound outlet 110 in the first direction. The first speaker 210 and the second speaker 220 are disposed side by side in the sound outlet channel 120. The first speaker 210 is located on a front side of the second speaker 220. There is a gap between an outer side surface of the first speaker 210 and at least one inner sidewall of the sound outlet channel 120, so that sound of the second speaker 220 is propagated toward the sound outlet 110 through the gap between the first speaker 210 and the sound outlet channel 120.

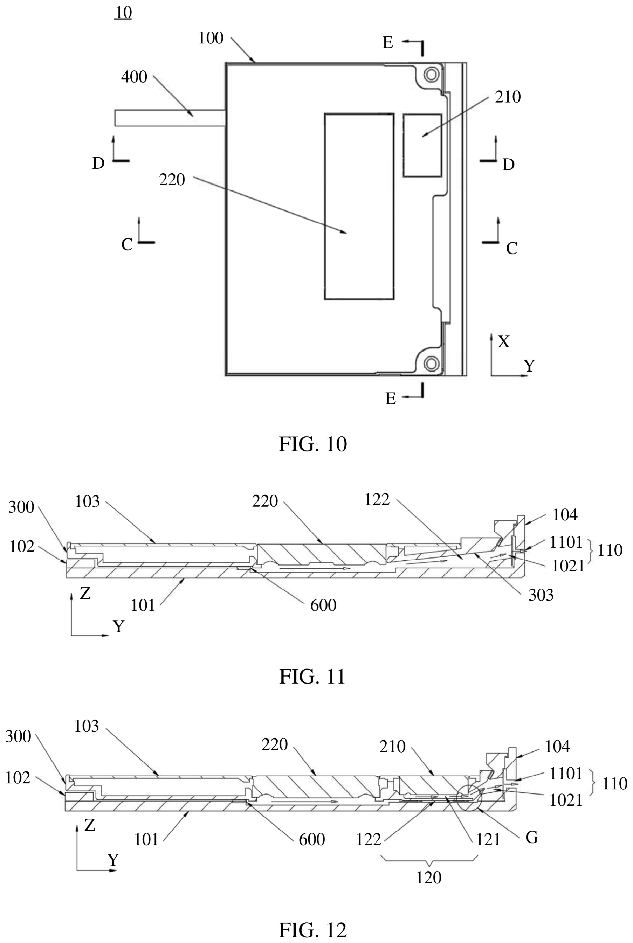

As shown in FIG. 10 to FIG. 12, in another feasible disposition manner, the speaker module 10 includes a baffle structure 300. The baffle structure 300 separates the sound outlet channel 120 into a first sound outlet channel 121 and a second sound outlet channel 122, and the first sound outlet channel 121 and the second sound outlet channel 122 are separately in communication with the sound outlet 110. In such a disposition manner, the first speaker 210 propagates the sound to the sound outlet 110 through the first sound outlet channel 121, the second speaker 220 propagates the sound to the sound outlet 110 through the second sound outlet channel 122. The baffle structure 300 is disposed to separate the sound outlet channel 120 into two parts, so that a size of the sound outlet channel 120 corresponding to the first speaker 210 is reduced, that is, a proportion of sound that is emitted by the first speaker 210 and that is propagated in the direction away from the sound outlet 110 is reduced, and more of the sound of the first speaker 210 is directly propagated toward the sound outlet 110.

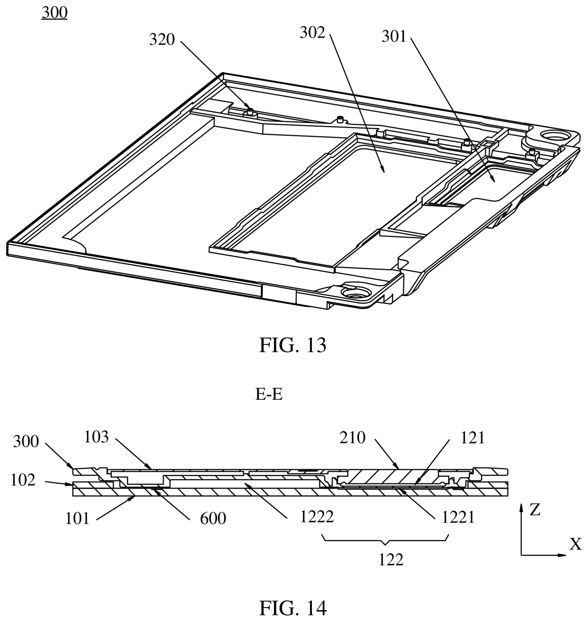

As shown in FIG. 13, in some implementations, a first limiting region 301 and a second limiting region 302 are disposed on the baffle structure 300. The first limiting region 301 is in communication with the first sound outlet channel 121, the second limiting region 302 is in communication with the second sound outlet channel 122, the first speaker 210 is mounted in the first limiting region 301, and the second speaker 220 is mounted in the second limiting region 302. The first limiting region 301 and the second limiting region 302 may be respectively slots or openings. When the first limiting region 301 and the second limiting region 302 are slots, a plurality of limiting blocks may be disposed in the baffle structure 300, and the plurality of limiting blocks enclose the slots. Alternatively, in the baffle structure 300, there is a region whose thickness is smaller than that of another region, and a difference between the thickness of this region and a thickness of a thicker region around this region makes this region the slot. Alternatively, stamping is performed in a region of the baffle structure 300, so that the baffle structure 300 is deformed, a slot is formed on one side, and a protrusion is formed on the other side. For example, both the first limiting region 301 and the second limiting region 302 are holes that run through the baffle structure 300 in the second direction. An inner wall of the first limiting region 301 limits the first speaker 210 to some extent, so that the first speaker 210 is fastened in the first direction and the third direction relative to the baffle structure 300, the inner wall of the first limiting region 301 is sealed with an outer sidewall of the first speaker 210, and a side that is of a slot and that is in the second direction is in communication with the first sound outlet channel 121, so that the sound of the first speaker 210 enters the first sound outlet channel 121 through the side that is of the slot and that is in communication with the first sound outlet channel 121. An inner wall of the second limiting region 302 limits the second speaker 220 to some extent, so that the second speaker 220 is fastened in the first direction and the third direction relative to the baffle structure 300. The inner wall of the second limiting region 302 is sealed with an outer sidewall of the second speaker 220, and a side that is of a slot and that is in the second direction is in communication with the second sound outlet channel 122, so that the sound of the second speaker 220 enters the second sound outlet channel 122 through the side that is of the slot and that is in communication with the second sound outlet channel 122.

In some implementations, as shown in FIG. 12, the second sound outlet channel 122 is in communication with the first sound outlet channel 121, and a communication part between the second sound outlet channel 122 and the first sound outlet channel 121 is located between the first speaker 210 and the sound outlet 110. In such a disposition manner, because the communication part between the second sound outlet channel 122 and the first sound outlet channel 121 (communication part for short hereinafter) is located between the first speaker 210 and the sound outlet 110, the second sound outlet pipeline is in indirect communication with the sound outlet 110 through a region that is of the first sound outlet pipeline and that is located between the communication part and the sound outlet 110, that is, the sound of the first speaker 210 is propagated toward the sound outlet 110 through the first sound outlet pipeline, and the sound of the second speaker 220 is propagated toward the sound outlet 110 through the first sound outlet pipeline after being propagated to the communication part through the second sound outlet pipeline. Because the sound outlet 110 is located between the first speaker 210 and the sound outlet 110, backflow and propagation of the sound of the first speaker 210 in the direction away from the sound outlet 110 may be reduced to some extent.

One end that is of the second sound outlet channel 122 and that is close to the second speaker 220 is a proximal end, one end that is of the second sound outlet channel 122 and that is close to the sound outlet 110 is a distal end. The distal end of the second sound outlet channel 122 may be entirely in communication with the first sound outlet channel 121, that is, the sound emitted by the second speaker 220 is completely propagated toward the first sound outlet channel 121 through the second sound outlet channel 122, and is propagated toward the sound outlet 110 through the first sound outlet channel 121.

In another disposition manner, in the third direction, a partial region of the distal end of the second sound outlet channel 122 is in communication with the first sound outlet channel 121, and is in communication with the sound outlet 110 through the first sound outlet channel 121, and the rest region of the distal end of the second sound outlet channel 122 continuously extends toward the sound outlet 110, and is in direct communication with the sound outlet 110. For ease of differentiation, as shown in FIG. 14, in the third direction, the second sound outlet channel 122 is divided into a first section 1221 and a second section 1222. The first section 1221 is in communication with the second section 1222, a distal end of the first section 1221 is in communication with the first sound outlet channel 121, and a distal end of the second section 1222 is in direct communication with the sound outlet 110. It should be noted that when the first speaker 210 is disposed close to the side of the second speaker 220, in FIG. 6, the first speaker 210 is disposed between the left region of the second speaker 220 and the sound outlet 110, the first section 1221 and the second section 1222 are sequentially distributed from left to right, and the first section 1221 is located on a left side of the second section 1222. When the first speaker 210 is centered relative to the second speaker 220, in FIG. 7, the first speaker 210 is disposed between the middle region of the second speaker 220 and the sound outlet 110, a quantity of first sections 1221 is two, the second section 1222 is located between the two first sections 1221, and the second sound outlet channel 122 is arranged as a first section 1221, a second section 1222, and the other first section 1221 separately from left to right.

As shown in FIG. 12, in some implementations, the housing body 100 includes a first wall 104 and a second wall 105. The first wall 104 and the second wall 105 are disposed at an angle and connected. The sound outlet 110 is disposed on the first wall 104. The baffle structure 300 includes a baffle plate 310, and the baffle plate 310 is disposed on a side that is of the first limiting region 301 and that faces the second wall 105. In the first direction, there is a gap between the baffle plate 310 and the first wall 104. In the second direction, there is a second gap 312 between the baffle plate 310 and the second wall 105. The second sound outlet channel 122 includes the second gap 312, and the second sound outlet channel 122 is in communication with the first sound outlet channel 121 through the first gap 311. In such a disposition manner, a region between the first speaker 210 and the second wall 105 is separated into two parts by the baffle plate 310. A region between the baffle plate 310 and the first speaker 210 belongs to the first sound outlet channel 121, and a second slit between the baffle plate 310 and the second wall 105 belongs to the second sound outlet channel 122. A cavity of the first sound outlet channel 121 is smaller due to obstruction of the baffle plate 310, thereby facilitating propagation of the sound of the first speaker 210 in a direction close to the sound outlet 110 to some extent, and reducing sound propagated in the direction away from the sound outlet. Because there is the first gap 311 between the baffle plate 310 and the first wall 104, the first sound outlet channel 121 can be in communication with the second sound outlet channel 122, so that the second gap 312 can be used as a part of the second sound outlet channel 122 for use. This part of second sound outlet channel 122 is in communication with the first sound outlet channel 121 through the first gap 311, and is in communication with the sound outlet 110 through the first sound outlet channel 121.

The first gap 311 is disposed, so that a region in which the second sound outlet channel 122 is in communication with the sound outlet 110 is larger, thereby improving airflow smoothness in the second sound outlet channel 122.

A size of the first gap 311 in the first direction is L1, and L1 affects airflow smoothness in the sound outlet channel 120. When L1 is excessively small, airflow smoothness in the second sound outlet channel 122 is relatively weakened. When L1 is excessively large, air flow in the first sound outlet channel 121 may enter the second sound outlet channel 122. Therefore, the size of the first gap 311 may be simulated through a simulation experiment to obtain optimal L1.

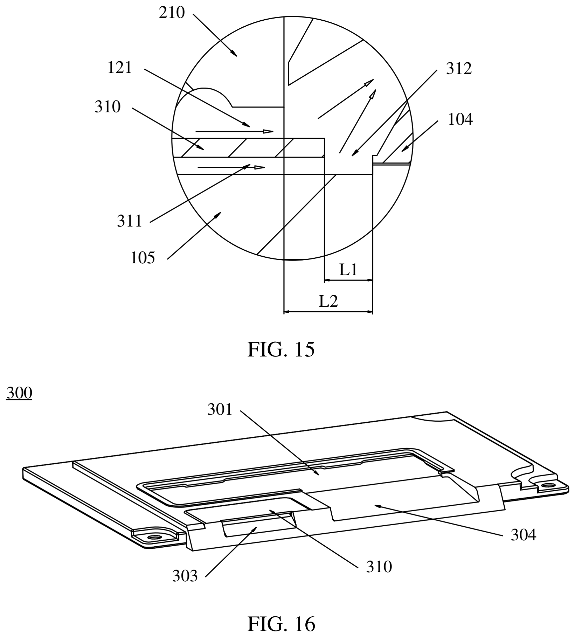

In some implementations, as shown in FIG. 15, the first gap 311 is L1, a distance between the first speaker 210 and the first wall 104 is L2, and L1≤L2. In FIG. 12 and FIG. 15, a sound outlet surface of the first speaker 210 is a side surface facing the baffle plate 310, so that L1≤L2, that is, the baffle plate 310 is closer to the first wall 104 relative to the first speaker 210. In the third direction, the baffle plate 310 separates the sound outlet surface of the first speaker 210 from the second sound outlet channel 122, to prevent the sound emitted by the first speaker 210 from directly entering the second sound outlet channel 122.

The first gap 311 is disposed to adjust air flow in the second sound outlet channel 122, so that the air flow in the second sound outlet channel 122 flows toward the first sound outlet channel 121 through the first gap 311, and flows toward the sound outlet 110 along the first sound outlet channel 121. A flow direction of sound is the same as a flow direction of air flow. Because the air flow in the second sound outlet channel 122 partially flows toward the sound outlet 110 after entering the first sound outlet channel 121 through the first gap 311, the air flow in the first sound outlet channel 121 is also driven to flow in the direction close to the sound outlet 110. Therefore, airflow smoothness in the first sound outlet channel 121 is also improved, and treble performance is improved.

As shown in FIG. 5 and FIG. 10 to FIG. 12, a sealing structure 600 is disposed between the baffle structure 300 and the second wall 105, and the sealing structure 600 is disposed on at least a side that is of the second sound outlet channel 122 and that is away from the sound outlet 110. The sealing structure 600 may block a slit between the second wall 105 and the baffle structure 300 on the side that is of the second sound outlet channel 122 and that is away from the sound outlet 110, thereby preventing the air flow from flowing in the direction away from the sound outlet 110. The sealing structure 600 may be made of a material that has flexibility, for example, rubber or silicone. As shown in FIG. 5, the sealing structure 600 may be in a ring shape. Both the first sound outlet channel 121 and the second sound outlet channel 122 are located in a region enclosed by the ring-shaped sealing structure 600, to implement good sealing for peripheral regions of the first sound outlet channel 121 and the second sound outlet channel 122. The air flow and sound in the first sound outlet channel 121 and the air flow and sound in the second sound outlet channel 122 are mostly or even completely output through the sound outlet 110.

In some implementations, in the third direction, a size of the sound outlet 110 is greater than a size of the first sound outlet channel 121, and a size of the second sound outlet channel 122 is greater than the size of the first sound outlet channel 121. In such a disposition, in the third direction, when the size of the second speaker 220 is greater than the size of the first speaker 210, the first sound outlet channel 121 corresponding to the first speaker 210 is opposite to a part of the sound outlet 110, to output the sound through a partial region of the sound outlet 110. The size of the second sound outlet channel 122 corresponding to the second speaker 220 may be the same as or close to the size of the sound outlet 110, so that the sound in the second sound outlet channel 122 is partially transmitted to the partial region of the sound outlet 110 through the first sound outlet channel 121, and the rest sound is directly output through the rest region of the sound outlet 110.

As shown in FIG. 12 and FIG. 16, in some implementations, the first sound outlet channel 121 includes a first guide surface 303. The first guide surface 303 is located between the first speaker 210 and the sound outlet 110, and the first guide surface 303 is inclined relative to the second wall 105. In FIG. 12, the first direction is a left-right direction, and the sound outlet 110 is located on a right side of the first speaker 210. One end that is of the sound outlet 110 and that faces the first speaker 210 is located at an upper location relative to a side surface on a side that is of the first speaker 210 and that faces the second wall 105. The first guide surface 303 is gradually inclined upward from left to right, so that the air flow obliquely flows upward. The first guide surface 303 is disposed, so that the air flow and sound in the first sound outlet channel 121 flow in the direction close to the sound outlet 110.

As shown in FIG. 11 and FIG. 16, in some implementations, the second sound outlet channel 122 includes a first section 1221 and a second section 1222 that are in mutual communication in the third direction. The first section 1221 is in communication with the first sound outlet channel 121, the first section 1221 is in communication with the sound outlet 110 through the first sound outlet channel 121, and the second section 1222 is in communication with the sound outlet 110. The second section 1222 includes a second guide surface 304, and the second guide surface 304 is inclined relative to the second wall 105. In FIG. 11, the second direction is a left-right direction, and the sound outlet 110 is located on a right side of the second speaker 220. One end that is of the sound outlet 110 and that faces the second speaker 220 is located at an upper location relative to a side surface on a side that is of the second speaker 220 and that faces the second wall 105. The second guide surface 304 is gradually inclined upward from left to right, so that the air flow obliquely flows upward. The second guide surface 304 is disposed, so that the air flow and sound in the second sound outlet channel 122 flow in the direction close to the sound outlet 110.

In some implementations, the speaker module 10 includes a circuit board 400. The circuit board 400 has a first conductive terminal 410 and a second conductive terminal 420. The first conductive terminal 410 is electrically connected to the first speaker 210, the second conductive terminal 420 is electrically connected to the second speaker 220, and the circuit board 400 is connected to the baffle structure 300. The circuit board 400 may be an FPC (Flexible Printed Circuit, flexible printed circuit 400). The FPC is relatively thin and has flexibility, which facilitates layout and saves a mounting space. The circuit board 400 may be connected to a main board in the electronic device to control the first speaker 210 and the second speaker 220 by using the main board, for example, to separately control an on/off state of the first speaker 210 and an on/off state of the second speaker 220. In this embodiment, the first speaker 210 and the second speaker 220 are powered by a same circuit board 400. In another embodiment, two circuit boards 400 may be used to respectively supply power to the first speaker 210 and the second speaker 220. The two circuit boards 400 may be separately connected to the main board in the electronic device, to control the first speaker 210 and the second speaker 220 by using the main board.

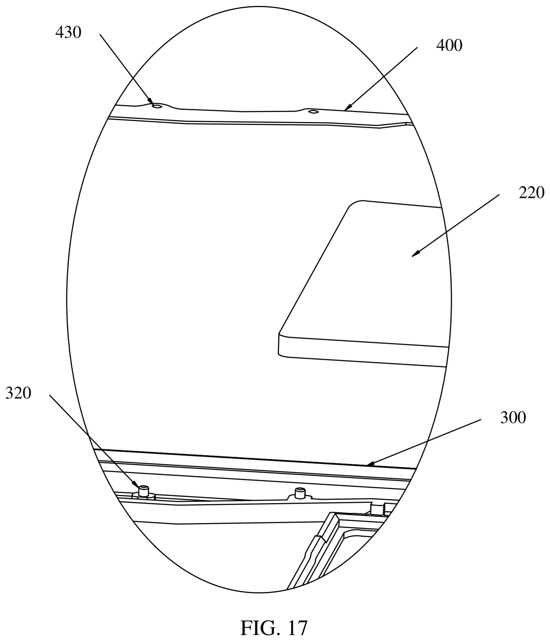

In a feasible implementation, as shown in FIG. 5 and FIG. 17, a positioning column 320 is disposed on the baffle structure 300, a positioning hole 430 is disposed on the circuit board 400, the circuit board 400 is sleeved on the positioning column 320 through the positioning hole 430, and the positioning column 320 is configured to limit the circuit board 400. For example, a plurality of positioning columns 320 are disposed on the baffle structure 300. Positioning holes 430 respectively corresponding to the positioning columns 320 are disposed on the circuit board 400. The plurality of positioning columns 320 are disposed in a one-to-one correspondence with the plurality of positioning holes 430, to limit a plurality of regions of the circuit board 400 through fitting between a plurality of groups of positioning columns 320 and positioning holes 430, thereby implementing a better limiting effect on the circuit board 400.

In some implementations, as shown in FIG. 5, FIG. 11, and FIG. 12, the speaker module 10 includes a cover plate 103. The cover plate 103 is disposed on a side that is of the baffle structure 300 and that is away from the second wall 105, and at least a partial structure of the circuit board 400 is located between the cover plate 103 and the baffle structure 300. The cover plate 103 and the baffle structure 300 are respectively located on two sides of the cover plate 103 in the second direction, to limit the circuit board 400 in the third direction, and the cover plate 103 and the baffle structure 300 protect the circuit board 400.

In some implementations, the cover plate 103 has a first positioning region 1031 and a second positioning region 1032. A side that is of the first speaker 210 and that is away from the second wall 105 is mounted in the first positioning region 1031, and a side that is of the second speaker 220 and that is away from the second wall 105 is mounted in the second positioning region 1032. The first positioning region 1031 and the second positioning region 1032 may be slots or holes. The first speaker 210 and the cover plate 103 are limited by each other. The cover plate 103 limits the first speaker 210, and the first speaker 210 limits the cover plate 103 to some extent. Similarly, the second speaker 220 and the cover plate 103 are also limited by each other. In addition, a partial region of the first speaker 210 extends into the first positioning region 1031, and a partial region of the second speaker 220 extends into the second positioning region 1032. In this way, in the second direction, the speaker module 10 has a more compact structure and a smaller size, that is, has a smaller thickness. The cover plate 103 is located on a side that is of the baffle structure 300 and that is away from the second wall 105 in the second direction, and the cover plate 103 is fixedly or detachably connected to the baffle structure 300.

To obtain advantages of the speaker module 10 provided in this embodiment over the speaker module 10 in the related technology through comparison, a comparison test is performed. In the speaker module 10 in the related technology, the tweeter and the woofer are disposed side by side in the width direction, and output sound through respective channels. The speaker module 10 provided in this embodiment includes the housing body 100, the baffle structure 300, the cover plate 103, the first speaker 210, and the second speaker 220, the housing body 100 has the sound outlet 110 and the sound outlet channel 120, the sound outlet channel 120 is in communication with the sound outlet 110, the first speaker 210 and the second speaker 220 are spaced from each other in the sound outlet channel 120 in the first direction, and the sound outlet channel 120 includes the first sound outlet channel 121 and the second sound outlet channel 122. The second speaker 220 is located on the side that is of the first speaker 210 and that is away from the sound outlet 110, the first speaker 210 is a tweeter, and the second speaker 220 is a woofer. The housing body 100 has the first wall 104 and the second wall 105, the sound outlet 110 is disposed on the first wall 104, the second wall 105 is spaced from the baffle structure 300 in the second direction, both the first speaker 210 and the second speaker 220 are mounted on the baffle structure 300, and the baffle structure 300 is connected to the housing body 100 by using a bolt. The baffle structure 300 includes the baffle plate 310. The baffle plate 310 is located between the first speaker 210 and the second wall 105, the region between the baffle plate 310 and the first speaker 210 belongs to the first sound outlet channel 121, there is the first gap 311 between the baffle plate 310 and the first wall 104, there is the second gap 312 between the baffle plate 310 and the second wall 105, and the second gap 312 belongs to the second sound outlet channel 122. In a partial region of the second sound outlet channel 122, sound enters the first gap 311 through the second gap 312, enters the first sound outlet channel 121 through the first gap 311, and flows toward the sound outlet 110 through the first sound outlet channel 121. In the rest region, sound directly flows toward the sound outlet 110 through the second sound outlet channel 122.

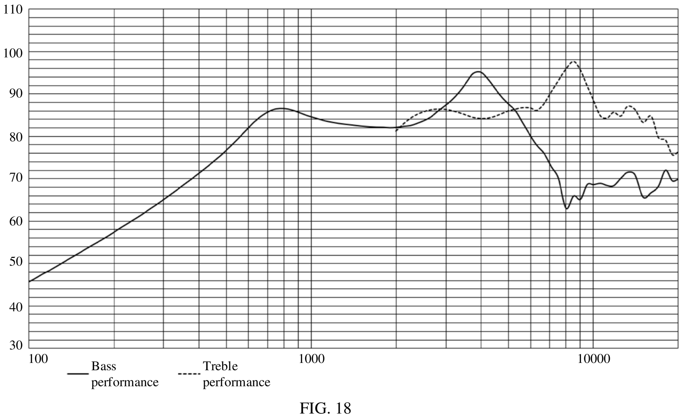

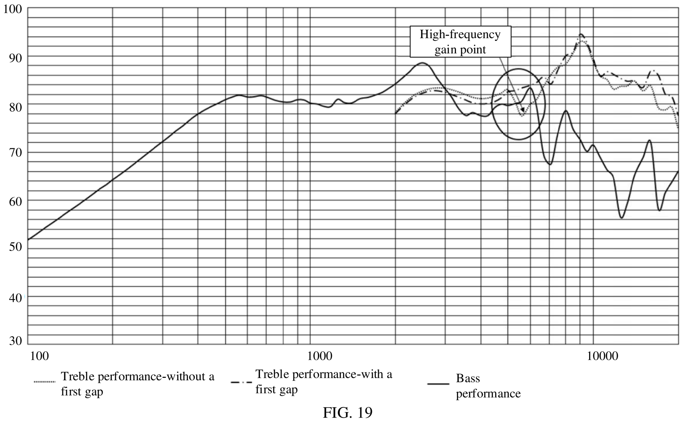

FIG. 18 shows a frequency response curve of the speaker module 10 in the related technology. FIG. 19 shows a frequency response curve of the speaker module 10 provided in this embodiment. In FIG. 18 and FIG. 19, both horizontal coordinates are frequencies in units of Hz and both vertical coordinates are sensitivities in units of dB. In a bass performance curve, sensitivity of the speaker module 10 in the related technology is 57.355 dB at 200 Hz, is 65.053 dB at 300 Hz, is 71.239 dB at 400 Hz, and is 76.678 dB at 500 Hz. Sensitivity of the speaker module 10 in this embodiment is 62.324 dB at 200 Hz, is 72.194 dB at 300 Hz, is 77.914 dB at 400 Hz, and is 80.932 dB at 500 Hz. It can be learned from the foregoing that bass performance of this embodiment is better. In FIG. 19, a difference in treble performance may be obtained through comparison between a case in which there is no first gap 311 between the baffle plate 310 and the first wall 104 and a case in which there is the first gap 311 between the baffle plate 310 and the first wall 104. It can be learned from a high-frequency gain point in FIG. 19 that treble performance of the speaker module 10 in which no first gap 311 is disposed degrades at this point, and treble performance of the speaker module 10 in which the first gap 311 is disposed is improved at this point. In conclusion, in the speaker module 10 with the first gap 311 provided in this embodiment, bass performance is improved in terms of a bass aspect, and in terms of a treble aspect, drop-off within 2 kHz-3 kHz is relatively significantly improved with sensitivity being flat, thereby increasing an overall frequency response bandwidth and consistency of the speaker module 10.

The foregoing embodiments are merely used to describe the technical solutions of this application, instead of limiting the technical solutions of this application. Although this application is described in detail with reference to the foregoing embodiments, persons of ordinary skill in the art should understand that they may still modify the technical solutions described in the foregoing embodiments, or perform equivalent replacement on some technical features. However, these modifications or replacements do not make the essence of the corresponding technical solutions depart from the spirit and scope of the technical solutions in embodiments of this application, and shall fall within the protection scope of this application.

## Claims

1. A speaker module, comprising:
a housing body, wherein the housing body has a sound outlet and a sound outlet channel, and the sound outlet channel is in communication with the sound outlet; and
a first speaker and a second speaker, spaced from each other in the sound outlet channel in a first direction, wherein the second speaker is located on a side that is of the first speaker and that is away from the sound outlet, and an operating frequency band of the first speaker is different from an operating frequency band of the second speaker.

2. The speaker module according to claim 1, wherein the operating frequency band of the first speaker is higher than the operating frequency band of the second speaker.

3. The speaker module according to claim 2, wherein the speaker module comprises a baffle structure, the baffle structure separates the sound outlet channel into a first sound outlet channel and a second sound outlet channel, and the first sound outlet channel and the second sound outlet channel are separately in communication with the sound outlet.

4. The speaker module according to claim 3, wherein a first limiting region and a second limiting region are disposed on the baffle structure, the first limiting region is in communication with the first sound outlet channel, the second limiting region is in communication with the second sound outlet channel, the first speaker is mounted in the first limiting region, and the second speaker is mounted in the second limiting region.

5. The speaker module according to claim 3, wherein the second sound outlet channel is in communication with the first sound outlet channel, and a communication part between the second sound outlet channel and the first sound outlet channel is located between the first speaker and the sound outlet.

6. The speaker module according to claim 5, wherein the housing body comprises a first wall and a second wall, the first wall and the second wall are disposed at an angle and connected, the sound outlet is disposed on the first wall, the baffle structure comprises a baffle plate, the baffle plate is disposed on a side that is of the first speaker and that faces the second wall, and in the first direction, there is a first gap between the baffle plate and the first wall; and in a second direction, there is a second gap between the baffle plate and the second wall, the second sound outlet channel comprises the second gap, the second sound outlet channel is in communication with the first sound outlet channel through the first gap, and the first direction is perpendicular to the second direction.

7. The speaker module according to claim 6, wherein the first gap is L1, a distance between the first speaker and the first wall is L2, and L1≤L2.

8. The speaker module according to claim 6, wherein in a third direction, a size of the sound outlet is greater than a size of the first sound outlet channel, a size of the second sound outlet channel is greater than the size of the first sound outlet channel, and two of the first direction, the second direction, and the third direction are perpendicular to each other.

9. The speaker module according to claim 8, wherein the first sound outlet channel comprises a first guide surface, the first guide surface is located between the first speaker and the sound outlet, and the first guide surface is inclined relative to the second wall.

10. The speaker module according to claim 8, wherein the second sound outlet channel comprises a first section and a second section that are in mutual communication in the third direction, the first section is in communication with the first sound outlet channel, the first section is in communication with the sound outlet through the first sound outlet channel, the second section is in communication with the sound outlet, the second section comprises a second guide surface, and the second guide surface is inclined relative to the second wall.

11. The speaker module according to claim 6, wherein the speaker module comprises a circuit board, the circuit board has a first conductive terminal and a second conductive terminal, the first conductive terminal is electrically connected to the first speaker, the second conductive terminal is electrically connected to the second speaker, and the circuit board is connected to the baffle structure.

12. The speaker module according to claim 11, wherein the speaker module comprises a cover plate, the cover plate is disposed on a side that is of the baffle structure and that is away from the second wall, and at least a partial structure of the circuit board is located between the cover plate and the baffle structure.

13. The speaker module according to claim 12, wherein the cover plate has a first positioning region and a second positioning region, a side that is of the first speaker and that is away from the second wall is mounted in the first positioning region, and a side that is of the second speaker and that is away from the second wall is mounted in the second positioning region.

14. The speaker module according to claim 6, wherein a sealing structure is disposed between the baffle structure and the second wall, and the sealing structure is disposed on at least a side that is of the second sound outlet channel and that is away from the sound outlet.

15. An electronic device, comprising the speaker module according to any one of claims 1-14.
